# EUROPEAN PATENT APPLICATION

(11) **EP 0 611 528 A1**
(43) Date of publication of application: **24.08.1994**
(21) Application number: 94301012.4
(22) Date of filing: 11.02.1994
(51) Int. Cl.: A23K 1/16, A23K 1/18

(54) **Chicken feed**

(30) Priority: 18.02.1993 JP 29270/93
(71) Applicant: ISE FOODS INC., Kounosu-shi, Saitama-ken (JP)
(72) Inventor: Ise, Shuntaro, Bunkyo-ku, Tokyo (JP)
(74) Representative: McCallum, William Potter

(57) **Abstract**

A new type of chicken feed (A) based on a powder form of eicosapentanoic acid and/or docosahexanoic acid uniformly mixed with an ordinary chicken feed is provided which does not significantly reduce egg production rates (P) over time.

## Description

This invention relates to a chicken feed.

It is well known that two types of fatty acids known as eicosapentaenoic acid, hereinafter referred to as EPA, and docosahexaenoic acid, hereinafter referred to as DHA, decrease the level of cholesterol inside the body upon consumption. These two fatty acids, EPA and DHA, present in the skin, tissue, and organs of various fish such as mackerels and herrings, are extracted and maintained as liquid in the presence of other liquid fatty acids. A liquid-based EPA and DHA fortified chicken feed has previously been prepared by spraying a fatty acid solution containing EPA and DHA on a batch of chicken feed continuously stirred. Feeding the chickens the fortified chicken feed results in producing EPA and DHA enriched chicken eggs that help decrease the level of cholesterol upon consumption.

However, a continuous feeding of the liquid-based EPA and DHA fortified chicken feed results in decreasing the egg production rate, and this necessarily increases the cost of the liquid-based EPA and DHA enriched chicken eggs. The decrease observed in the egg production rate is believed to be rooted in the high fat content of the solution containing EPA and DHA. It is believed that the ingestion of the fortified chicken feed leads to an unbalanced high fat diet that contributes to deteriorating the health of the chickens and, consequently, to decreasing the egg production rate.

Also, since the solution containing EPA and DHA is subject to rapid oxidation when exposed to air, the EPA and DHA solution at the site of a chicken farm must be handled with extreme care. Since it is not possible to prepare and stock a large batch of the liquid-based EPA and DHA fortified chicken feed because of rapid oxidation, only a quantity necessary for immediate feeding needs is prepared using the carefully preserved EPA and DHA solution. Thus, efficiency is compromised in the chicken farm business because the fortified chicken feed cannot be stocked but must be prepared repeatedly, and the EPA and DHA solution must be preserved under a very strict condition. This less efficiency also contributes to the high cost of the liquid-based EPA and DHA enriched chicken eggs.

Another problem associated with the liquid-based EPA and DHA is that it is difficult to mix the solution uniformly with the chicken feed, causing the quantity of EPA and DHA ingested by the chickens to range widely. This, in turn, results in large differences in the concentration of EPA and DHA in the liquid-based EPA and DHA enriched chicken eggs.

According to a first aspect of the invention, there is provided a chicken feed comprising a regular chicken feed and an additive powder mixture containing eicosapentaenoic acid and/or docosahexaenoic acid.

It will be apparent that embodiments of the above first aspect of the invention may provide an economical EPA and/or DHA fortified chicken feed that allows a high constant rate of production of EPA and/or DHA enriched eggs.

According to a second aspect of the present invention, there is provided a method of incorporating eicosapentaenoic acid and docosahexaenoic acid into chicken eggs comprising feeding chickens a regular chicken feed admixed with a powder form of eicosapentaenoic acid and/or docosahexaenoic acid.

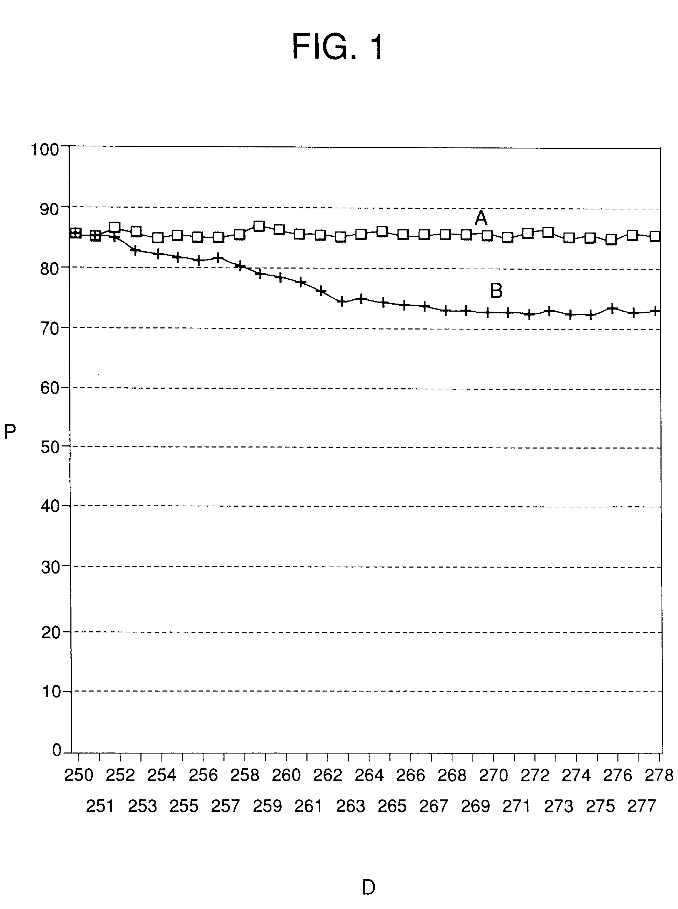

For a better understanding of the present invention and to show how the same may be carried into effect reference will now be made, by way of example, to the attached Fig. 1 which is a graph showing the time dependency of the production rate of eggs for Group A and Group B over the course of the experiment. Therein, P denotes the egg production rate, and D indicates the number of days since the chickens hatched. A refers to Group A, and B refers to Group B.

With reference to Tables 1, 2, 3, and 4, there will now be described a preferred embodiment of the present invention. An experiment was conducted to compare the egg production rate of a group of chickens, hereinafter referred to as Group A, fed on the powder-based EPA and DHA fortified chicken feed, hereinafter referred to as Feed A, to the egg production rate of a group of chickens, hereinafter referred to as Group B, fed on the liquid-based EPA and DHA fortified chicken feed, hereinafter referred to as Feed B.

**Table 1**

| Content of Feed A with 1.5% of Powder EPA and DHA by weight | Weight in Percent |
|---|---|
| water | 6.48 |
| fat | 4.75 |
| protein | 18.91 |
| saccharides | 40.10 |
| fiber | 8.28 |
| ash | 21.48 |

**Table 2**

| Content of Feed A with EPA and DHA | Weight in Percent |
|---|---|
| water | 5 |
| fiber | 40 |
| fat | 55 |
| EPA | 8.77 |
| DHA | 4.80 |

**Table 3**

| Content of Feed B with 1.5% of Liquid EPA and DHA Additive by weight | Weight in Percent |
|---|---|
| water | 8.7 |
| fat | 5.1 |
| protein | 15.3 |
| saccharides | 50.4 |
| fiber | 5.9 |
| ash | 14.6 |

Table 1 shows the composition of Feed A in which the powder form of EPA and DHA admixed was 1.5% by weight. The powder form of EPA and DHA is sold by Nissin Flour Milling Co., Ltd., Tokyo, Japan under the trade name of "Omega 3." Table 2 shows the amount of EPA and DHA in Feed A in percent weight of the total fat content. Table 3 shows the ingredients incorporated in Feed B in which the liquid additive containing EPA and DHA, an ester form of fish oil, admixed was 1.5% by weight. Table 4 shows the quantity of EPA and DHA incorporated in the same Feed A and Feed B.

**Table 4**

| | Feed A | Feed B |
|---|---|---|
| Amount of EPA/100g of Feed | 130 mg | 520mg |
| Amount of DHA/100g of Feed | 70mg | 460mg |
| Amount of EPA/100g of Feed in % weight | 0.13% | 0.52% |
| Amount of DHA/100g of Feed in % weight | 0.07% | 0.46% |
| Amount of Fatty Acid/100g of Feed | 4.750mg | 5.100mg |
| Amount of EPA in Fatty Acid in % weight | 2.73% | 10.19% |
| Amount of DHA in Fatty Acid in % weight | 1.47% | 9.01% |

The experiment was conducted for 29 days from the 1st to the 29th of October, 1991, and twelve hundred ISA Brown chickens, known for laying reddish-brown colored eggs, and hatched exactly 250 days before the start of the experiment, were divided equally between Group A and Group B. The chickens in flocks of three were nurtured in a cage of dimensions, 45cm (width) x 45cm (height) x 30cm (depth). Group A were fed Feed A and Group B were fed Feed B daily at exactly 2 o'clock in the afternoon. Furthermore, a constant supply of fresh water for drinking was provided.

The following values were recorded daily for Group A and Group B: (1) the number of chickens, (2) the number of eggs produced--the eggs were collected everyday at 4 o'clock in the afternoon since the chickens finish laying eggs by noon, (3) the average weight of egg for each group, and (4) the rate of egg production for each group--the number of eggs divided by the number of chickens per group. Moreover, one day a week, the average weight of feed ingested per chicken per day for each group was derived by subtracting the amount of feed supplied in a day with the amount of feed left uneaten the same day. The tabulated data are shown in Tables 5 and 6.

Fig. 1 shows the graph of egg production rate of Group A and Group B, which is indicated on the vertical axis, with respect to days, which is indicated on the horizontal axis. As can be seen from the graph, the egg production rate for Group A, which was fed on the powder-based EPA and DHA fortified feed, remains approximately constant over the course of the experiment but, on the other hand, the egg production rate for Group B declines over time before leveling off to a lower level of egg production rate. Since Feed B contains the liquid EPA and DHA fortified feed containing a large amount of fat, it is believed that the chickens fed on this high fat

**Table 5**

| | | A GROUP | | | | |
|---|---|---|---|---|---|---|
| Month/Day | Days since Hatching | No. of Chickens | No. of Eggs | Egg Production Rate (%) | Average Weight of Egg (g) | Average Weight of Feed Ingested/Chicken/day (g) |
| 10/01 | 250 | 600 | 510 | 85.00 | 61.30 | 111.00 |
| 10/02 | 251 | 600 | 508 | 84.67 | 61.31 | |
| 10/03 | 252 | 600 | 516 | 86.00 | 61.26 | |
| 10/04 | 253 | 599 | 512 | 85.48 | 61.32 | |
| 10/05 | 254 | 599 | 506 | 84.47 | 61.34 | |
| 10/06 | 255 | 599 | 509 | 84.97 | 61.36 | |
| 10/07 | 256 | 599 | 507 | 84.64 | 61.39 | |
| 10/08 | 257 | 599 | 506 | 84.47 | 61.40 | 112.20 |
| 10/09 | 258 | 599 | 510 | 85.14 | 61.38 | |
| 10/10 | 259 | 598 | 517 | 86.45 | 61.41 | |
| 10/11 | 260 | 598 | 513 | 85.79 | 61.44 | |
| 10/12 | 261 | 598 | 510 | 85.28 | 61.46 | |
| 10/13 | 262 | 598 | 509 | 85.12 | 61.49 | |
| 10/14 | 263 | 598 | 508 | 84.95 | 61.51 | |
| 10/15 | 264 | 597 | 510 | 85.43 | 61.51 | 113.15 |
| 10/16 | 265 | 597 | 512 | 85.76 | 61.51 | |
| 10/17 | 266 | 596 | 507 | 85.07 | 61.43 | |
| 10/18 | 267 | 596 | 507 | 85.07 | 61.45 | |
| 10/19 | 268 | 596 | 509 | 85.40 | 61.46 | |
| 10/20 | 269 | 596 | 508 | 85.23 | 61.43 | |
| 10/21 | 270 | 596 | 510 | 85.57 | 61.41 | |
| 10/22 | 271 | 596 | 507 | 85.07 | 61.42 | 112.84 |
| 10/23 | 272 | 595 | 509 | 85.55 | 61.46 | |
| 10/24 | 273 | 595 | 510 | 85.71 | 61.51 | |
| 10/25 | 274 | 595 | 504 | 84.71 | 61.53 | |
| 10/26 | 275 | 595 | 506 | 85.04 | 61.48 | |
| 10/27 | 276 | 595 | 503 | 84.54 | 61.53 | |
| 10/28 | 277 | 595 | 508 | 85.38 | 61.49 | |
| 10/29 | 278 | 595 | 506 | 85.04 | 61.51 | 114.25 |

**Table 6**

| | | B GROUP | | | | |
|---|---|---|---|---|---|---|
| Month/Day | Days since Hatching | No. of Chickens | No. of Eggs | Egg Production Rate (%) | Average Weight of Egg (g) | Average Weight of Feed Ingested/Chicken/day (g) |
| 10/01 | 250 | 600 | 511 | 85.17 | 61.31 | 111.10 |
| 10/02 | 251 | 600 | 508 | 84.67 | 61.32 | |
| 10/03 | 252 | 600 | 509 | 84.83 | 61.31 | |
| 10/04 | 253 | 600 | 495 | 82.50 | 61.22 | |
| 10/05 | 254 | 600 | 492 | 82.00 | 61.19 | |
| 10/06 | 255 | 599 | 487 | 81.30 | 61.20 | |
| 10/07 | 256 | 599 | 484 | 80.80 | 61.34 | |
| 10/08 | 257 | 599 | 485 | 80.97 | 61.36 | 113.24 |
| 10/09 | 258 | 599 | 480 | 80.13 | 61.38 | |
| 10/10 | 259 | 599 | 471 | 78.63 | 61.26 | |
| 10/11 | 260 | 598 | 468 | 78.26 | 61.33 | |
| 10/12 | 261 | 597 | 461 | 77.22 | 61.30 | |
| 10/13 | 262 | 597 | 453 | 75.88 | 61.31 | |
| 10/14 | 263 | 597 | 442 | 74.04 | 61.34 | |
| 10/15 | 264 | 597 | 444 | 74.37 | 61.33 | 112.56 |
| 10/16 | 265 | 597 | 441 | 73.87 | 61.32 | |
| 10/17 | 266 | 597 | 438 | 73.37 | 61.36 | |
| 10/18 | 267 | 597 | 436 | 73.03 | 61.40 | |
| 10/19 | 268 | 597 | 433 | 72.53 | 61.33 | |
| 10/20 | 269 | 596 | 432 | 72.48 | 61.40 | |
| 10/21 | 270 | 596 | 430 | 72.15 | 61.37 | |
| 10/22 | 271 | 596 | 431 | 72.32 | 61.38 | 113.24 |
| 10/23 | 272 | 596 | 430 | 72.15 | 61.36 | |
| 10/24 | 273 | 595 | 431 | 72.44 | 61.33 | |
| 10/25 | 274 | 594 | 428 | 72.05 | 61.34 | |
| 10/26 | 275 | 594 | 427 | 71.89 | 61.36 | |
| 10/27 | 276 | 594 | 433 | 72.90 | 61.40 | |
| 10/28 | 277 | 594 | 428 | 72.05 | 61.42 | |
| 10/29 | 278 | 594 | 430 | 72.39 | 61.39 | 114.11 |

content feed lose their balance in diet and, consequently, their egg production rate is decreased.

Furthermore, it was observed that the normal reddish-brown color of the eggs of Group B faded over the course of the experiment, and by the end, over 80% of the eggs in this group suffered this discoloration. In contrast, the eggs of Group A did not have any discoloration as seen in the eggs of Group B. It is thought that such discoloration is another indication of burden placed upon the chickens of Group B by the high fat content of Feed B. However, the discoloration was based on visual impression only: no quantification of discoloration was attempted.

As mentioned above, chicken feed based on the powder form of EPA and DHA enrichment does not decrease the level of egg production, and at the same time, contributes to concentrating a higher quantity of EPA and DHA into eggs in comparison with the normal eggs produced with a non-EPA and DHA fortified feed. Hence, EPA and DHA enriched eggs can be produced for general consumption at a lower cost.

Additionally, since the powder form of EPA and DHA is much less susceptible to oxidation in comparison with the liquid form of EPA and DHA, it becomes possible to stock a large batch of EPA and DHA fortified chicken feed in a warehouse. Therefore, this possibility of stocking a large quantity of the powder-based EPA and DHA fortified chicken feed further contributes to reducing the production cost of the EPA and DHA enriched chicken eggs.

The example above is submitted to illustrate but not to limit this invention.

## Claims

1. A chicken feed comprising a regular chicken feed and an additive powder mixture containing eicosapentaenoic acid and/or docosahexaenoic acid.

2. The chicken feed according to Claim 1, wherein said additive powder mixture is uniformly mixed in an amount permitting a constant rate of chicken egg production during an entire feeding period of said chicken feed.

3. The chicken feed according to Claims 1 or 2, wherein said additive powder mixture comprises approximately 1.5% by weight of said chicken feed.

4. The chicken feed according to Claims 1,2 or 3, wherein a total fat content of said chicken feed is less than 5% by weight.

5. A method of incorporating eicosapentaenoic acid and docosahexaenoic acid into chicken eggs comprising feeding chickens a regular chicken feed admixed with a powder form of eicosapentaenoic acid and/or docosahexaenoic acid.

6. The method in Claim 5 wherein said powder form of eicosapentaenoic acid and/or docosahexaenoic acid is admixed to said chicken feed in an amount permitting a constant rate of chicken egg production during an entire feeding period of said chicken feed admixed with said powder form.
